# DEMANDE DE BREVET EUROPEEN

(11) **EP 0 527 512 A1**
(43) Date de publication de la demande: **17.02.1993**
(21) Numéro de dépôt: 92202141.5
(22) Date de dépôt: 13.07.1992
(51) Int. Cl.: F16L 11/08, D04B 9/44

(54) **Tuyau flexible à maillage de renfort**

(30) Priorité: 07.08.1991 IT VI910129
(71) Demandeur: FITT S.p.A., I-36030 Fara Vicentino (Vicenza) (IT)
(72) Inventeur: Mezzalira, Rinaldo, Arcugnano (Vicenza) (IT)
(74) Mandataire: Bettello, Pietro, Dott. Ing.

(57) **Abrégé**

Tuyau flexible avec maillage de renfort, du type comprenant une couche intérieure cylindrique (2) sur laquelle est enroulé un tissu à fil maillé (1) revêtu à son tour d'une autre couche extérieure (3), également cylindrique, ledit tissu comprenant deux maillages du type dit à mailles lisses ou rasées suivant l'invention les boucles des maillages présentent un profil substantiellement trapézoïdal, en même temps que l'entrelacement des quatre fils de ces maillages est effectué dans un espace très réduit.

## Description

La présente invention a trait à un tuyau flexible à maillage de renfort, suivant la partie générique de la revendication 1.

On sait que les tuyaux flexibles destinés notamment à être utilisés dans les installations hydrauliques et similaire, sont réalisés en une matière plastique telle que le PVC, le polyéthylène, le caoutchouc ou autre ; ils sont généralement obtenu par extrusion.

Afin d'augmenter la résistance de ces tuyaux aussi bien à la pression interne qu'à l'usure par torsion, on a réalisé des articles comprenant une couche cylindrique interne sur laquelle sont enroulés des fils eux-mêmes revêtus à leur tour par une couche cylindrique extérieure, toujours en matière plastique, le plus souvent de type transparent. Dans les articles tes plus simples et les plus économiques de ce genre, les fils sont simplement enroulés en hélice, mais on obtient des résultat bien meilleurs en faisant en sorte que les fils forment un maillage en s'enchaînant les uns aux autres et en formant des courbes plus ou moins sinueuses, communément appelées boucles ou mailles élémentaires.

La conformation du maillage généralement employé pour le renfort des tuyaux flexibles est constituée par un tissu tramé, dit "à mailles lisses ou rasées" dans lequel deux extrémités du fil formant les boucles s'entrecroisent sur elles-mêmes en se déplaçant de manière hélicoïdale dans la direction de l'élément tubulaire en cours de formation. Ces maillages sont réalisés sur des machines de tricotage de type circulaire, qui comprennent une série d'aiguilles disposées sur un manchon présentant un diamètre plus grand que celui de la couche à recouvrir ; ces aiguilles de déplacent sous l'action d'une came, à la façon bien connue en pratique.

Dans le but d'améliorer encore les caractéristiques de résistance du tuyau, on a eu recours à un tissu tramé constitué par deux maillages du type à mailles lisses qui, réalisés simultanément, présentent de manière alternée les rangées de boucles des trames correspondantes afin d'obtenir la superposition et l'entrelacement des quatre fils employés pour l'enchaînement.

La présente invention a pour but de réaliser un tuyau flexible à maillage double de renfort qui comporte des caractéristiques de résistance améliorées par rapport aux articles similaires de type connu.

Le tuyau suivant l'invention est défini à la revendication 1, tandis que son procédé de réalisation fait l'objet de la revendication 2.

En fait l'invention consiste à conférer aux boucles de maillage double un profil substantiellement trapézoïdal, les bases de ce profil étant supérieures à la hauteur, tandis que l'entrelacement des quatre fils qui constituent ce maillage est effectué dans un espace extrêmement réduit.

Ces caractéristiques ainsi que d'autres suivant l'invention vont maintenant être décrites de manière détaillée en correspondance à une forme particulière de réalisation, donnée à titre d'exemple non limitatif, avec l'aide du dessin annexé dans lequel :
La figure 1 est une vue schématique de l'article suivant l'invention.
La figure 2 est un schéma du tissu tramé.
La figure 3 montre un agrandissement de la zone d'entrelacement des quatres fils formant le tissu tramé caractéristique de l'invention.

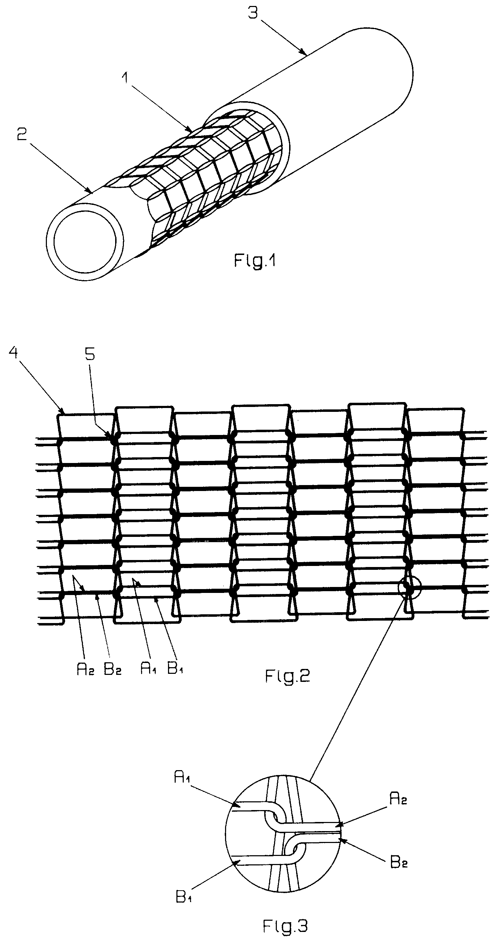

Comme montré en fig. 1, le tuyau flexible suivant l'invention est du genre qui comprend une couche cylindrique intérieure 2 sur laquelle est enroulé un tissu à fil maillé 1 revêtu à son tour par une couche extérieure 3, elle-même de forme cylindrique.

Comme on peut le voir en fig. 2, le tissu est du type en soi connu comportant deux maillages du genre appelés à mailles lisses ou rasées, qui présentent en alternance les rangées des boucles 4 des trames respectives afin d'obtenir la superposition et l'enchevêtrement des quatre fils (A1, A2, B1, B2) employés pour l'entrelacement.

La caractéristique fondamentale de l'invention réside dans le fait que les boucles 4 présentent un profil substantiellement en forme de trapèze, dont les bases sont nettement plus grandes que la hauteur. De plus l'entrelacement 5 des quatres fils qui constituent le maillage est réalisé dans un espace extrêmement réduit (comme bien montré en fig. 3).

Une telle conformation permet en plus d'obtenir une densité de quatre vingt rangées par décimètre linéaire. Au surplus la succession très rapprochée des points d'entrelacement ou noeuds 5 permet de constituer une série de fils ou cordons longitudinaux de renfort, propres à accroître la résistance à l'éclatement du tuyau. Les essais qui ont été effectués ont permis de vérifier que cette résistance est supérieure d'environ 30% à celle obtenue avec un tuyau analogue de type connu.

Grâce au maillage suivant l'invention, la pression se répartit de manière uniforme sur toute la surface de l'article, ce qui permet de réduire considérablement le risque d'étranglement du tuyau sous l'effet d'une torsion, ce défaut étant caractéristique des tuyaux flexibles de type classique.

En outre le tuyau suivant l'invention présente des caractéristiques améliorées en ce qui concerne le retour élastique, vis-à-vis des tubes analogues connus.

Comme on l'a déjà indiqué ci-dessus, ce tuyau est préférablement obtenu à l'aide de machines de tricotage circulaire appropriées, de type en soi connu. De manière avantageuse on prévoit en outre que la came qui commande les aiguilles propres à la réalisation du maillage soit tournée à 180° par rapport à ce qui est habituellement prévu dans les machines de ce genre ; de plus on fait en sorte que le diamètre du manchon sur lequel sont montées les aiguilles soit supérieur au diamètre extérieur de la couche cylindrique interne 2, et ce dans un pourcentage qui peut varier de 15 à 70% mais qu'on fixera préférablement supérieur à 35%.

## Revendications

1. Tuyau flexible à maillage de renfort, du type comprenant une couche cylindrique intérieure (2) sur laquelle est enroulé un tissu à fil maillé (1) recouvert à son tour par une autre couche extérieure (3) elle-même cylindrique, ledit tissu comportant deux maillages du type dit à mailles lisses ou rasées qui présentent de manière alternée les rangées des boucles (4) des trames respectives de manière à réaliser la superposition et l'entrelacement des quatre fils employés dans l'entrecoisement, caractérisé en ce que les boucles (4) présentent un profil subtantiellement trapézoïdal dont les bases sont nettement supérieures à la hauteur, tandis que l'entrelacement (5) des quatre fils qui constituent le maillage est effectué dans un espace extrêmement réduit.

2. Procédé pour la réalisation du tuyau flexible suivant la revendication 1, qui utilise pour la réalisation du maillage une machine de tricotage du type circulaire en elle-même connue, caractérisé en ce que la came qui commande les aiguilles formant l'entrelacement est tournée à 180° par rapport à celui habituellement prévu dans les machines connues, tandis que le diamètre du manchon sur lequel sont montées les aiguilles est supérieur au diamètre extérieur de la couche cylindrique interne (2) dans un pourcentage compris entre 15 et 70%, préférablement 35%.
